# EUROPEAN PATENT SPECIFICATION

(11) **EP 2 908 262 B1**
(45) Date of publication and mention of the grant of the patent: **17.02.2016**
(21) Application number: 14155579.7
(22) Date of filing: 18.02.2014
(51) Int. Cl.: G06F 21/64, G06F 7/10, G06F 21/85

(54) **Security Token, Transaction Execution Method, and Computer Program Product**
Sicherheitstoken, Verfahren zur Ausführung einer Transaktion und Computerprogrammprodukt
Jeton de sécurité, procédé d'exécution de transaction et produit de programme informatique

(43) Date of publication of application: 19.08.2015
(73) Proprietor: NXP B.V., 5656 AG Eindhoven (NL)
(72) Inventor: Polak, Piotr, 5656 AG Eindhoven (NL); Brands, Jan Réne, 5656 AG Eindhoven (NL); Van Roermund, Timotheus Arthur, 5656 AG Eindhoven (NL)
(74) Representative: Krott, Michel

(56) References cited:
- DE-A1-102005 008 433
- ANONYMOUS: 'Replay attack' WIKIPEDIA, THE FREE ENCYCOPEDIA, [Online] 26 November 2004, page 1, XP055017033 Retrieved from the Internet: <URL:http://en.wikipedia.org/w/index.php?ti tle=Replay_attack&oldid=11912995> [retrieved on 2012-01-20]

## Description

### FIELD

The present disclosure relates to a security token for use in a transaction execution system. Furthermore, the present disclosure relates to a method for executing a transaction using a security token, and to a corresponding computer program product.

### BACKGROUND

Today, security plays an important role when carrying out transactions. Many of the currently available services that require security measures to protect user accounts, data and online transactions use secure-element-based hardware tokens. These tokens typically consist of a secure element attached to a secure or trusted user interface (UI) that incorporates a simple display and a keypad. Furthermore, these tokens typically comprise a battery that is used to provide energy for operating the other components of the tokens. Well-known examples of such tokens are the so-called RSA tokens (such as RSA SecureID® tokens) that are, amongst others, used to setup a Virtual Private Network (VPN) connection. The trusted UI allows a user to securely confirm transactions by letting him or her visually verify transaction data and confirm that a transaction should proceed by pressing a button or by entering a Personal Identification Number (PIN) or a password. Such UI elements increase the size of the token and they add cost to the bill-of-material for the token.

DE 10 2005 008433 A1 describes a safety module having a microcontroller with a processor and a memory, which contains stored data that are specific for the module and/or a user. An interface receives input data, for example a password, from an input device. Another interface communicates with a computer. The input data from the interface are processed using the individual data and without transmitting of data to other interface in operation mode. A method for operating a safety module is also described.

The Wikipedia article "Replay attack", retrieved from the website http://en.wikipedia.org/wiki/Replay attack on 25 February 2015, describes what a replay attack is.

### SUMMARY

There is disclosed a security token as defined in claim 1.

According to an illustrative embodiment, the security token further comprises a secure element being arranged to facilitate processing the transaction verification input, wherein said processing comprises comparing the transaction verification input with a reference value stored in the secure element.

According to a further illustrative embodiment, the secure element is further arranged to execute at least a part of an authentication process between the host device and the security token.

According to a further illustrative embodiment, the secure element is further arranged to execute at least a part of an authentication process between the user interface device and the security token.

According to a further illustrative embodiment, the transaction verification result comprises a digital signature or a message authentication code.

According to a further illustrative embodiment, the transaction verification result comprises a response to a cryptographic challenge.

According to a further illustrative embodiment, the security token is connectable to the host device through a USB interface.

According to a further illustrative embodiment, the transaction verification input comprises at least one of: a user confirmation by touch or click; a password entry; a PIN entry; a biometric feature; an entry of patterns or gestures drawn on a screen; a shaking pattern sensed by an accelerometer.

According to a further illustrative embodiment, the security token is integrated into a wearable device.

According to a further illustrative embodiment, a transaction execution system comprises a security token of the kind set forth, a host device and a user interface device.

According to a further illustrative embodiment, the host device is connectable to a cloud service.

According to a further illustrative embodiment, the user interface device is an NFC-enabled mobile device.

Furthermore, there is disclosed a method for executing a transaction as defined in claim 13.

Furthermore, there is disclosed a computer program product comprising instructions which, when being executed by a processing unit comprised in a security token, carry out or control steps of a method of the kind set forth.

### DESCRIPTION OF DRAWINGS

Embodiments will be described in more detail with reference to the appended drawings, in which:
Fig. 1 shows an illustrative embodiment of a transaction execution system;
Fig. 2 shows an illustrative embodiment of a transaction execution method.

### DESCRIPTION OF EMBODIMENTS

In accordance with the present disclosure, a security token is provided that receives and processes a transaction verification input from an external user interface device, such as a smart phone. The security token may take the form of a secure hardware token. The token further sends a corresponding transaction verification result to a host device to which the token may be connected. In an illustrative implementation, the token may comprise a secure element interfacing to a host device via a USB connection and to a mobile phone via NFC. A user may visually verify transaction data and enter for example a PIN or password securely through a mobile phone, which, in accordance with the present disclosure, may act as the token's Trusted UI companion device.

Thus, the security token does not need to be equipped with a rich user interface. That is to say, the functionality of the token may be reduced to security functions, for example. The token may receive the transaction verification input (for example the PIN or the password) via a wireless or contactless communication interface, which increases the user convenience. If the contactless interface comprises an NFC interface, a relatively high level of security may be achieved due to the fact that the NFC connection is inherently limited to relatively small operating distances. Since the security token no longer requires an embedded user interface, it may easily be integrated into other devices worn by a user, such as a watch or jewelry. Furthermore, the user interface may be richer than the user interfaces of conventional, stand-alone tokens, such as RSA hardware tokens or Yubico® keys. Generally speaking, the presently disclosed token may have a smaller form factor, a lower cost price and an increased reliability compared to conventional tokens.

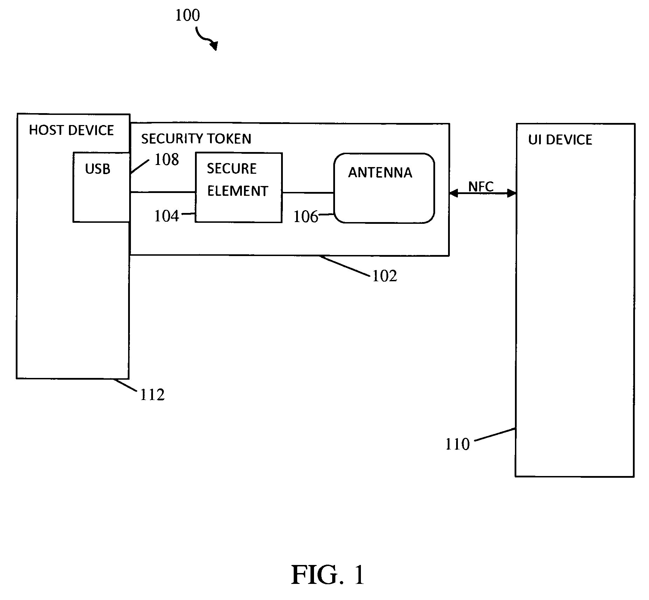

**Fig. 1** shows an illustrative embodiment of a transaction execution system. The transaction execution system 100 comprises a security token 102, a mobile phone 110 and a host device 112. The security token 102 may comprise a secure element 104, an NFC antenna 106 for connecting the token 102 to the mobile phone 110, and a USB connector 108 for connecting the token 102 to the host device 112. The secure element may be implemented as an embedded chip, more specifically as a tamper-resistant integrated circuit with (pre-)installed smart-card-grade applications, for instance payment applications, which have a prescribed functionality and a prescribed level of security. For example, the secure element may be an integrated circuit of the so-called SmartMX™ or SmartMX2™ series of ICs produced by NXP Semiconductors. In operation, the token 102 receives transaction verification input from the mobile phone 110 through the NFC antenna 106. The mobile phone 110 may have captured said transaction verification input via a rich UI. Since the mobile phone 110 may be equipped with a relatively sophisticated user interface, biometric features may also be captured and provided as transaction verification input to the token 102. The token 102 processes the transaction verification input and generates a corresponding transaction verification result. In accordance with the present disclosure, the secure element 104 may be arranged to facilitate processing of the transaction verification input, for example by keeping a reference value with which the transaction verification input may be compared in order to generate a corresponding transaction verification result. Subsequently, the token 102 sends the transaction verification result to the host device 112 through the USB connector 108. A USB connection provides a convenient communication channel. Alternatively, the token 102 may be connected to the host device 112 by means of other communication technologies, such as Wi-Fi® and Bluetooth®.

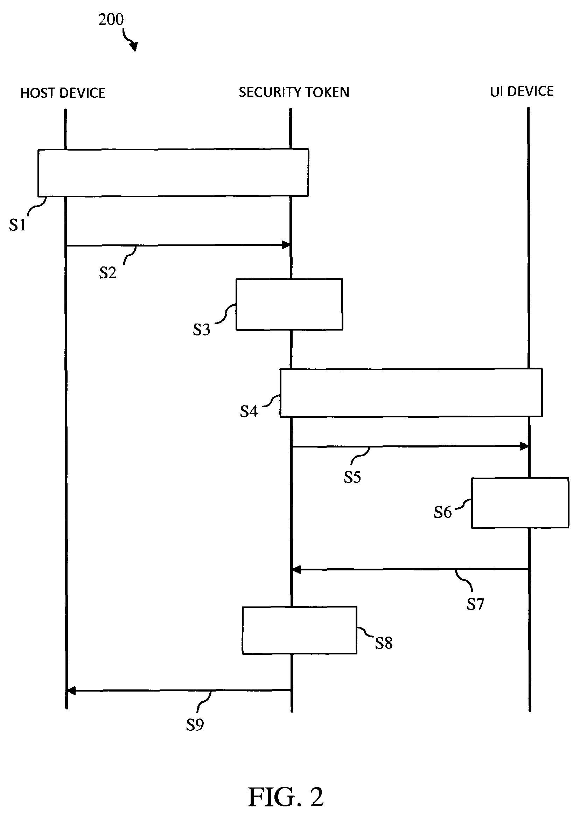

**Fig. 2** shows an illustrative embodiment of a transaction execution method. The transaction execution method 200 comprises the following steps. An authentication process may be executed S1 between a hardware token (i.e. the security token) and a device connected to a cloud service (i.e. the host device), thereby further increasing the security. This authentication process is preferably a mutual authentication process. For example, in this authentication process cryptographic keys (session keys) may be generated that may be used to authenticate and/or encrypt data to be exchanged with the security token.

Furthermore, for example after a positive authentication result, the host device may send S2 an authenticated and/or encrypted transaction signing request to the security token. Furthermore, the security token may verify and/or decrypt the request and initiate S3 a transaction data processing function. Furthermore, an authentication process may be executed S4 between the security token and the mobile phone, thereby further increasing the security. Again, this authentication process is preferably a mutual authentication process. For example, in this authentication process cryptographic keys (session keys) may be generated that may be used to authenticate and/or encrypt data to be exchanged with the mobile phone.

Furthermore, for example after a positive authentication result, the security token may send S5 an authenticated and/or encrypted verification request to the mobile phone. Furthermore, the mobile phone may decrypt the request and perform a user verification function S6, which comprises capturing the transaction verification input through a user interface of the mobile phone. For example, transaction data (e.g. the bank account number, total transaction sum) may be displayed to the user with a request to approve this by pressing a button on the phone's screen.

Furthermore, the mobile phone may send S7 a captured transaction verification input to the security token. The transaction verification input may be transmitted in authenticated and/or encrypted form. For example, the transaction verification input may be authenticated (via a MAC or digital signature) and/or encrypted with the session keys generated in step S4.

Furthermore, the security token may verify the authenticated transaction verification input (e.g. by verifying said MAC or digital signature) and/or decrypt the transaction verification input. Furthermore, it may verify whether the input is valid by comparing it to a reference value stored in its secure element, for example, in order to generate S8 a corresponding transaction verification result. The input may, for example, be verified by means of an algorithm that takes into account a characteristic of the phone with which the token is paired. That is to say, the phone may already have been paired with the token in a pairing step (not shown), such that the token will only respond to a single phone (paired one). The verification may then also involve verification against data obtained during said pairing and stored in the token's secure element. As an example, the phone's unique identifier - i.e. the International Mobile Equipment Identity (IMEI) - may be used for this purpose. The verification may involve a verification of a combined value, for instance the IMEI combined with user input (e.g. a PIN).

The transaction verification result may for example take the form of a digital signature, which provides an efficient yet secure way to convey it to the host device. The digital signature may be appended to the transaction data received from the host device in step S2. Next, the transaction data including the digital signature may be sent S9 to the host device in order to confirm that the transaction may proceed. These signed transaction data may be sent to the host device in encrypted form, using the session keys generated in step S1, for example. The signature itself may be regarded as the actual confirmation that the verification succeeded. If the signature is correct, the transaction should be executed; if the signature cannot be validated, the transaction must not be executed. In a typical implementation, the signature may be a digital signature over at least a part of the transaction data and the private key used to create the signature may be stored securely in the hardware token. The cloud service may validate the digital signature if it possesses the public key of the token. As an alternative to a digital signature, a message authentication code (MAC) may be used for conveying a positive verification result to the host device. A MAC is the equivalent of a digital signature in symmetric cryptographic systems.

Alternatively or in addition, the transaction verification result comprises a response to a cryptographic challenge provided by the host device. In that case, the token may use the transaction verification input for generating said response. This may be implemented as follows. The hardware token may - if the user confirms the transaction via the mobile phone, perform a cryptographic operation on the challenge sent by the cloud service (using a key stored in the token) and send the result back to the cloud service. The cryptographic operation may comprise the calculation of a digital signature or a MAC, created over the challenge, which may optionally be augmented or extended with at least a part of the transaction data and/or at least a part of the user input received from the phone.

A transaction execution method of the kind set forth may, for example, be applied in the following practical scenario. In this practical, illustrative scenario, the device connected to the cloud service may be a personal computer (PC) and the cloud service may be a banking website running on a server owned by a bank. The security token may, for example, be an e-reader device with an embedded banking card, e.g. a secure element that emulates a banking card. The security token may be connected to the PC via USB. In this scenario, the user prepares a money transfer from one bank account to another via the bank's website. To confirm the transaction, the website sends a transaction signing request to the PC's web browser which redirects it to the security token. This signing request may contain some information on the money transfer (bank account, how much money to transfer etc.). The security token forwards a part of the request to the phone. The phone then asks the user to confirm the transaction. For this purpose, it may for example display information on the actual transfer (bank account, how much money to transfer etc.) and ask the user to verify this information. The user may confirm by simply pressing a button or by entering for example a password or PIN code. The user confirmation may then be sent to the security token, which verifies the user confirmation (e.g. PIN) and if the verification has a positive result, it will cryptographically sign the transaction and send the result to the cloud service (banking website).

It will be appreciated that the mobile phone may comprise a secure element as well; this secure element may be used to execute a part of the authentication processes, in collaboration with the secure element of the token. Furthermore, cryptographic keys and other sensitive data that should be available to the mobile phone for performing the above-described functions may be stored securely in the secure element of the mobile phone.

It is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: transaction execution system
- 102: security token
- 104: secure element
- 106: NFC antenna
- 108: USB connector
- 110: user interface device
- 112: host device
- 200: transaction execution method
- S1: authentication process
- S2: send transaction request
- S3: transaction data processing
- S4: authentication process
- S5: send verification request
- S6: capture verification input
- S7: send verification input
- S8: verify input and sign transaction
- S9: send signed transaction

## Claims

1. A security token (102) for use in a transaction execution system (100), the security token (102) being connectable to a user interface device (110) and to a host device (112), the security token (102) being arranged to:
- receive a transaction verification input from the user interface device (110);
- process the transaction verification input and generate a corresponding transaction verification result;
- transmit the transaction verification result to the host device (112),
and the security token (102) comprising a secure element (104) which is arranged to facilitate processing of the transaction verification input,
**characterized in that** the security token (102) is connectable to the user interface device (110) through an NFC interface.

2. A security token (102) as claimed in claim 1, wherein said processing comprises comparing the transaction verification input with a reference value stored in the secure element (104).

3. A security token (102) as claimed in claim 1 or 2, wherein the secure element (104) is further arranged to execute at least a part of an authentication process between the host device (112) and the security token (102).

4. A security token (102) as claimed in any preceding claim, wherein the secure element (104) is further arranged to execute at least a part of an authentication process between the user interface device (110) and the security token (102).

5. A security token (102) as claimed in any preceding claim, wherein the transaction verification result comprises a digital signature or a message authentication code.

6. A security token as claimed in any preceding claim, wherein the transaction verification result comprises a response to a cryptographic challenge.

7. A security token (102) as claimed in any preceding claim, being connectable to the host device (112) through a USB interface.

8. A security token (102) as claimed in any preceding claim, wherein the transaction verification input comprises at least one of: a user confirmation by touch or click; a password entry; a PIN entry; a biometric feature; an entry of patterns or gestures drawn on a screen; a shaking pattern sensed by an accelerometer.

9. A security token (102) as claimed in any preceding claim, integrated into a wearable device.

10. A transaction execution system (100) comprising a security token (102) as claimed in any preceding claim, a host device (112) and a user interface device (110).

11. A transaction execution system (100) as claimed in claim 10, wherein the host device (112) is connectable to a cloud service.

12. A transaction execution system (100) as claimed in claim 10 or 11, wherein the user interface device (110) is an NFC-enabled mobile device.

13. A method for executing a transaction using a security token (102), the security token comprising a secure element (104) and being connectable to a user interface device (110) and to a host device (112), and the method comprising:
- the security token (102) receives a transaction verification input from the user interface device (110);
- the security token (102) processes the transaction verification input and generates a corresponding transaction verification result;
- the security token (102) transmits the transaction verification result to the host device (112),
- the secure element (104) facilitates processing of the transaction verification input,
**characterized in that** the security token (102) is connectable to the user interface device (110) through an NFC interface.

14. A computer program product comprising instructions which, when being executed by a processing unit comprised in a security token (102), carry out or control steps of a method as claimed in claim 13.

## Patentansprüche

1. Ein Security Token (102) zum Verwenden in einem Transaktionsausführungssystem (100), wobei das Security Token (102) mit einer Nutzer Schnittstellenvomichtung (110) und mit einer Hostvorrichtung (112) verbindbar ist, wobei das Security Token (102) eingerichtet ist zum:
- Empfangen einer Transaktionsverifikationseingabe von der Nutzer Schnittstellenvomichtung (110);
- Verarbeiten der Transaktionsverifikationseingabe und Erzeugen eines korrespondierenden Transaktionsverifikationsergebnisses;
- Übertragen des Transaktionsverifikationsergebnisses zu der Hostvorrichtung (112), und
wobei das Security Token (102) ein sicheres Element (104) aufweist, welches eingerichtet ist, das Verarbeiten der Transaktionsverifikationseingabe zu erleichtern,
**dadurch gekennzeichnet, dass** das Security Token (102) mit der Nutzer Schnittstellenvomichtung (110) durch eine NFC Schnittstelle verbindbar ist.

2. Ein Security Token (102) gemäß Anspruch 1, wobei das Verarbeiten aufweist
Vergleichen der Transaktionsverifikationseingabe mit einem Referenzwert, welcher in dem sicheren Element (104) gespeichert ist.

3. Ein Security Token (102) gemäß Anspruch 1 oder 2, wobei das sichere Element (104) ferner eingerichtet ist, zumindest einen Teil eines Authentifizierungsvorgangs zwischen der Hostvorrichtung (112) und dem Security Token (102) auszuführen.

4. Ein Security Token (102) gemäß irgendeinem vorangehenden Anspruch, wobei das sichere Element (104) ferner eingerichtet ist, zumindest einen Teil eines Authentifizierungsvorgangs zwischen der Nutzer Schnittstellenvoruchtung (110) und dem Security Token (102) auszuführen.

5. Ein Security Token (102) gemäß irgendeinem vorangehenden Anspruch, wobei das Transaktionsverifikationsergebnis eine digitale Signatur oder einen Nachrichten Authentifikationscode aufweist.

6. Ein Security Token gemäß irgendeinem vorangehenden Anspruch, wobei das Transaktionsverifikationsergebnis eine Reaktion auf eine kryptographische Aufforderung aufweist.

7. Ein Security Token (102) gemäß irgendeinem vorangehenden Anspruch, welches mit der Hostvorrichtung (112) durch eine USB Schnittstelle verbindbar ist.

8. Ein Security Token (102) gemäß irgendeinem vorangehenden Anspruch, wobei die Transaktionsverifikationseingabe aufweist zumindest eines von: einer Nutzerbestätigung mittels einer Berührung oder eines Klicks; einer Passworteingabe; einer PIN Eingabe; einem biometrischen Merkmal; einer Eingabe von Mustern oder Gesten, welche auf einem Bildschirm gezeichnet werden; einem Schüttelmuster, welches mittels eines Beschleunigungsmessers abgetastet wird.

9. Ein Security Token (102) gemäß irgendeinem vorangehenden Anspruch, welches in eine tragbare Vorrichtung integriert ist.

10. Ein Transaktionsausführungssystem (100) aufweisend
ein Security Token (102) gemäß irgendeinem vorangehenden Anspruch,
eine Hostvorrichtung (112), und
eine Nutzer Schnittstellenvoruchtung (110).

11. Ein Transaktionsausführungssystem (100) gemäß Anspruch 10, wobei die Hostvorrichtung (112) mit einem Cloud Service verbindbar ist.

12. Ein Transaktionsausführungssystem (100) gemäß Anspruch 10 oder 11, wobei die Nutzer Schnittstellenvomichtung (110) eine NFC-fähige mobile Vorrichtung ist.

13. Ein Verfahren zum Ausführen einer Transaktion unter Verwenden eines Security Tokens (102), wobei das Security Token ein sicheres Element (104) aufweist und mit einer Nutzer Schnittstellenvomichtung (110) und mit einer Hostvorrichtung (112) verbindbar ist, und wobei das Verfahren aufweist:
das Security Token (102) empfängt eine Transaktionsverifikationseingabe von der Nutzer Schnittstellenvoruchtung (110);
das Security Token (102) verarbeitet die Transaktionsverifikationseingabe und erzeugt ein korrespondierendes Transaktionsverifikationsergebnis;
das Security Token (102) überträgt das Transaktionsverifikationsergebnis zu der Hostvorrichtung (112),
das sichere Element (104) erleichtert das Verarbeiten der Transaktionsverifikationseingabe,
**dadurch gekennzeichnet, dass** das Security Token (102) mit der Nutzer Schnittstellenvomichtung (110) durch eine NFC Schnittstelle verbindbar ist.

14. Ein Computer Programmprodukt aufweisend Anweisungen, welche, wenn sie mittels einer verarbeitenden Einheit ausgeführt werden, welche in einem Security Token (102) enthalten ist, Schritte eines Verfahrens gemäß Anspruch 13 ausführen oder steuern.

## Revendications

1. Jeton (102) de sécurité destiné à être utilisé dans un système (100) d'exécution de transactions, le jeton (102) de sécurité pouvant être relié à un dispositif (110) d'interface d'utilisateur et à un dispositif hôte (112), le jeton (102) de sécurité étant configuré pour:
- recevoir une entrée de validation de transaction en provenance du dispositif (110) d'interface d'utilisateur;
- traiter l'entrée de validation de transaction et générer un résultat correspondant de validation de transaction;
- envoyer le résultat de validation de transaction au dispositif hôte (112),
et le jeton (102) de sécurité comportant un élément sécurisé (104) qui est configuré pour faciliter le traitement de l'entrée de validation de transaction, **caractérisé en ce que** le jeton (102) de sécurité peut être relié au dispositif (110) d'interface d'utilisateur via une interface NFC.

2. Jeton (102) de sécurité selon la revendication 1, ledit traitement comportant la comparaison de l'entrée de validation de transaction avec une valeur de référence conservée dans l'élément sécurisé (104).

3. Jeton (102) de sécurité selon la revendication 1 ou 2, l'élément sécurisé (104) étant en outre configuré pour exécuter au moins une partie d'un processus d'authentification entre le dispositif hôte (112) et le jeton (102) de sécurité.

4. Jeton (102) de sécurité selon l'une quelconque des revendications précédentes, l'élément sécurisé (104) étant en outre configuré pour exécuter au moins une partie d'un processus d'authentification entre le dispositif (110) d'interface d'utilisateur et le jeton (102) de sécurité.

5. Jeton (102) de sécurité selon l'une quelconque des revendications précédentes, le résultat de validation de transaction comportant une signature numérique ou un code d'authentification de message.

6. Jeton de sécurité selon l'une quelconque des revendications précédentes, le résultat de validation de transaction comportant une réaction à une mise à l'épreuve cryptographique.

7. Jeton (102) de sécurité selon l'une quelconque des revendications précédentes, pouvant être relié au dispositif hôte (112) via une interface USB.

8. Jeton (102) de sécurité selon l'une quelconque des revendications précédentes, l'entrée de validation de transaction comportant au moins une entrée parmi : une confirmation de l'utilisateur par toucher ou clic ; une saisie de mot de passe ; une saisie de PIN ; une caractéristique biométrique ; une saisie de motifs ou de gestes tracés sur un écran ; un profil de secousses détecté par un accéléromètre.

9. Jeton (102) de sécurité selon l'une quelconque des revendications précédentes, intégré dans un dispositif vestimentaire.

10. Système (100) d'exécution de transactions comportant un jeton (102) de sécurité selon l'une quelconque des revendications précédentes, un dispositif hôte (112) et un dispositif (110) d'interface d'utilisateur.

11. Système (100) d'exécution de transactions selon la revendication 10, le dispositif hôte (112) pouvant être relié à un service en nuage.

12. Système (100) d'exécution de transactions selon la revendication 10 ou 11, le dispositif (110) d'interface d'utilisateur étant un dispositif mobile apte à la NFC.

13. Procédé d'exécution d'une transaction à l'aide d'un jeton (102) de sécurité, le jeton de sécurité comportant un élément sécurisé (104) et pouvant être relié à un dispositif (110) d'interface d'utilisateur et à un dispositif hôte (112), et le procédé comportant les étapes suivantes :
- le jeton (102) de sécurité reçoit une entrée de validation de transaction en provenance du dispositif (110) d'interface d'utilisateur ;
- le jeton (102) de sécurité traite l'entrée de validation de transaction et génère un résultat correspondant de validation de transaction ;
- le jeton (102) de sécurité envoie le résultat de validation de transaction au dispositif hôte (112),
- l'élément sécurisé (104) facilite le traitement de l'entrée de validation de transaction,
**caractérisé en ce que** le jeton (102) de sécurité peut être relié au dispositif (110) d'interface d'utilisateur via une interface NFC.

14. Produit de programme informatique comportant des instructions qui, lorsqu'elles sont exécutées par une unité de traitement comprise dans un jeton (102) de sécurité, réalisent ou commandent des étapes d'un procédé selon la revendication 13.
